# EUROPEAN PATENT SPECIFICATION

(11) **EP 1 081 708 B1**
(45) Date of publication and mention of the grant of the patent: **31.03.2004**
(21) Application number: 00402398.2
(22) Date of filing: 30.08.2000
(51) Int. Cl.: G11B 33/04, G11B 33/00

(54) **Storage case**
Aufbewahrungsbehälter
Boîtier de stockage

(30) Priority: 03.09.1999 JP 24989399
(43) Date of publication of application: 07.03.2001
(73) Proprietor: SONY CORPORATION, Tokyo (JP)
(72) Inventor: Rie, Izu, Shinagawa-ku, Tokyo (JP); Shuichi, Kikuchi, Shinagawa-ku, Tokyo (JP)
(74) Representative: Thévenet, Jean-Bruno

(56) References cited:
- US-A- 4 356 918
- US-A- 4 615 445
- US-A- 5 355 997

## Description

### BACKGROUND OF THE INVENTION

### 1. Field of the Invention:

This invention relates to a storage case suitably used to store therein information recording media (which will hereinafter be referred to as disks), such as magnetic disks, optical disks, photoelectro-magnetic disks, etc.

### 2. Description of the Related Art:

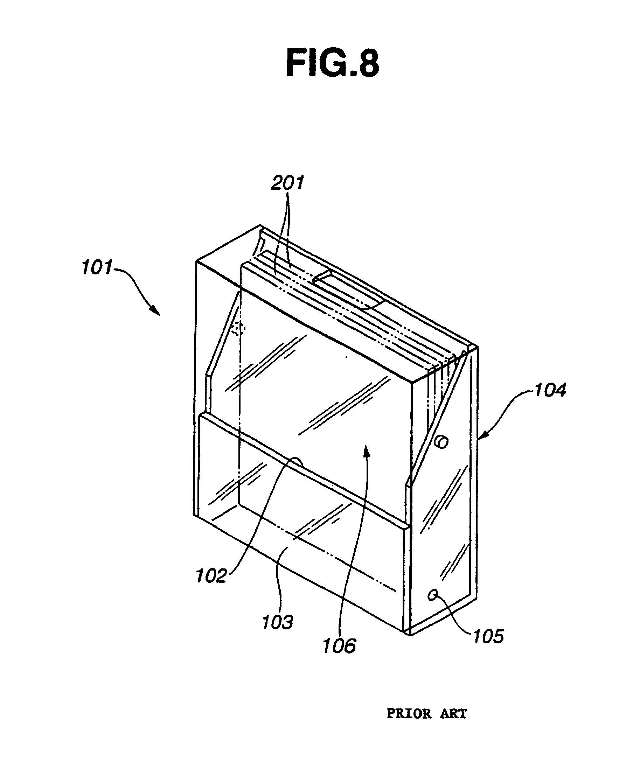

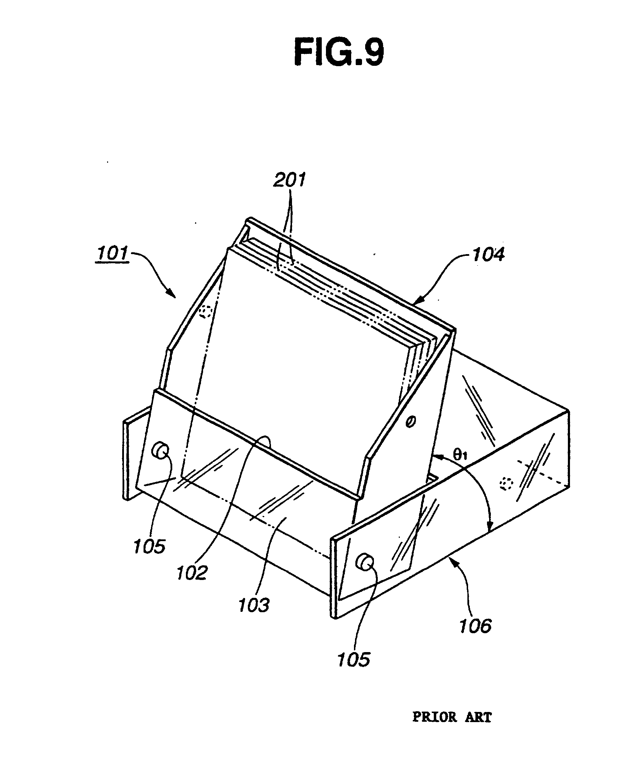

A storage case shown in Figs. 8 to 10 is known as a storage case for storing plural pieces of disks therein. This disk storage case 101 has an inner case member 103 forming a pocket portion 102 in which a disk 201 is inserted, an outer case member 104 provided with the inner case member 103 therein, and a cover 106 mounted pivotally via shafts 105 to the outer case member 104. The storage case is formed so that, when the cover 106 in a closed state as shown in Fig. 8 is turned through an angle not smaller than 270° to put the cover 106 in a fully opened state as shown in Fig. 9, the outer case member 104 can be supported on the cover 106 as a base in such an inclined state that the outer case member has a predetermined angle of inclination of θ₁.

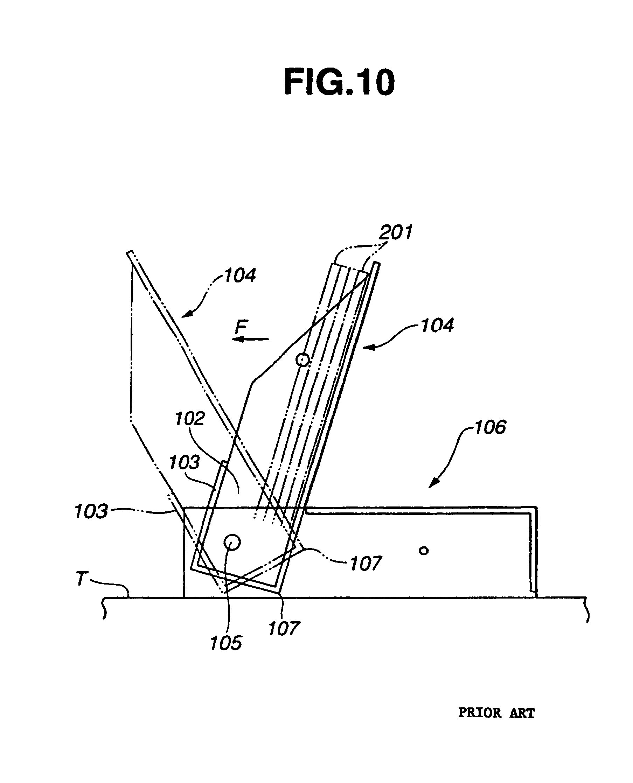

When the outer case member 104 of the above-described related art storage case 101 is in the condition in which the outer case member 104 is inclined at a predetermined angle of θ₁, a ridge portion (or edge) 107 at the lowermost end of the outer case member 104 is in a position spaced from a storage case placing surface T as shown by solid lines in Fig. 10, i.e., the outer case member 104 is supported in the condition in which the outer case member 104 floats with respect to the storage case placing surface T. Therefore, when an external force F is exerted on the outer case member 104, the outer case member 104 is easily put in a forwardly tilted state as shown by two-dot chain lines in Fig. 10.

A storage case similar to that shown in Figs. 8 to 10 is known from US 5,355, 997, which forms the basis for the preamble of claim 1.

### SUMMARY OF THE INVENTION

The present invention provides a storage case the outer case member of which does not fall forward easily.

According to the present invention (cf. claim 1) a storage case comprises: an inner case member forming a pocket portion for receiving object articles; an outer case member which is connected with the inner case member thus forming the storage case and which has a lower ridge portion to be placed on a storage case placing surface; and
a cover pivotally mounted on the outer case member. The cover is swung from a closed state to an opened state in which the outer case member is inclined at a predetermined inclination angle with respect to a seating face of the cover and thereby supported on the cover. The lower ridge portion of the outer case member projects downward from the seating face of the cover in the open state.

### BRIEF DESCRIPTION OF THE DRAWINGS

Fig. 1 is a perspective view of the storage case with the cover in a .. closed state.
Fig. 2 is a perspective view of the storage case with the cover in an opened state.
Fig. 3 is an exploded perspective view of the storage case.
Fig. 4 is a side view of the storage case with the cover in a closed state.
Fig. 5 is a side view of the storage case with the cover in a slightly opened state.
Fig. 6 is a side view of the storage case with the cover in a fully opened state.
Fig. 7 is a side view of the storage case with the pocket portion in a forwardly inclined state.
Fig. 8 is a perspective view of a related art storage case (with the cover in a closed state).
Fig. 9 is a perspective view of an example of a related art storage case (with the cover in an opened state).
Fig. 10 is a side view showing a problem of the example of the related art storage case.

### DESCRIPTION OF THE PREFERRED EMBODIMENTS

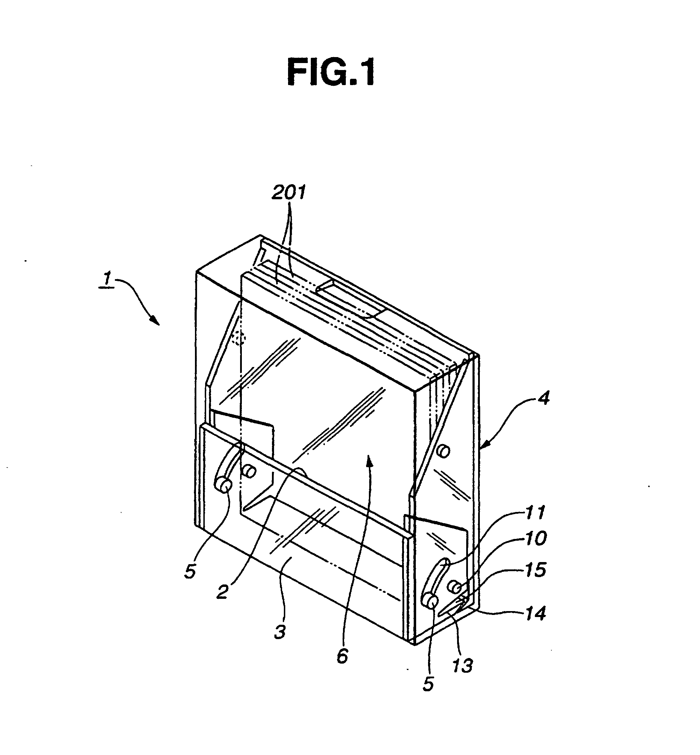

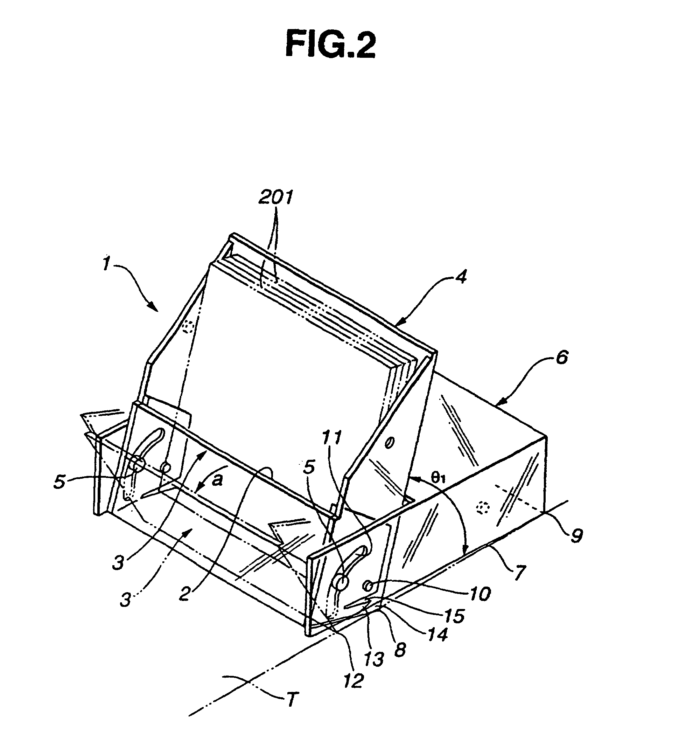

Fig. 1 is a perspective view of a storage case 1 with a cover in a closed state, and FIG. 2 a perspective view of the same storage case with the cover in an opened state. The storage case 1 has an inner case member 3 forming a pocket portion 2 in which plural disk cartridges 201...201 as object articles to be stored are inserted, an outer case member 4 provided with the inner case member 3 therein, and a cover 6 mounted pivotally or rotatably to the outer case member 4 via first shafts 5. The cover 6 is rotatable from a closed state as shown in FIG. 1 about 290° to a fully opened state as shown in Fig. 2. In the fully open state shown in Fig. 2, the outer case member 4 is supported on an upward facing storage case placing surface T of a table, etc. via the cover 6 as a base in such an inclined state that the outer case member 4 has a predetermined inclination angle of θ1.

The outer case member 4 has a first (or lower) ridge portion (or edge) 8 projecting from a seating face 7 of the cover 6 when the outer case member 4 is inclined at the predetermined angle θ₁. The seating face 7 is a lower face of the cover 6 facing downward when the cover 6 is in the fully open position.

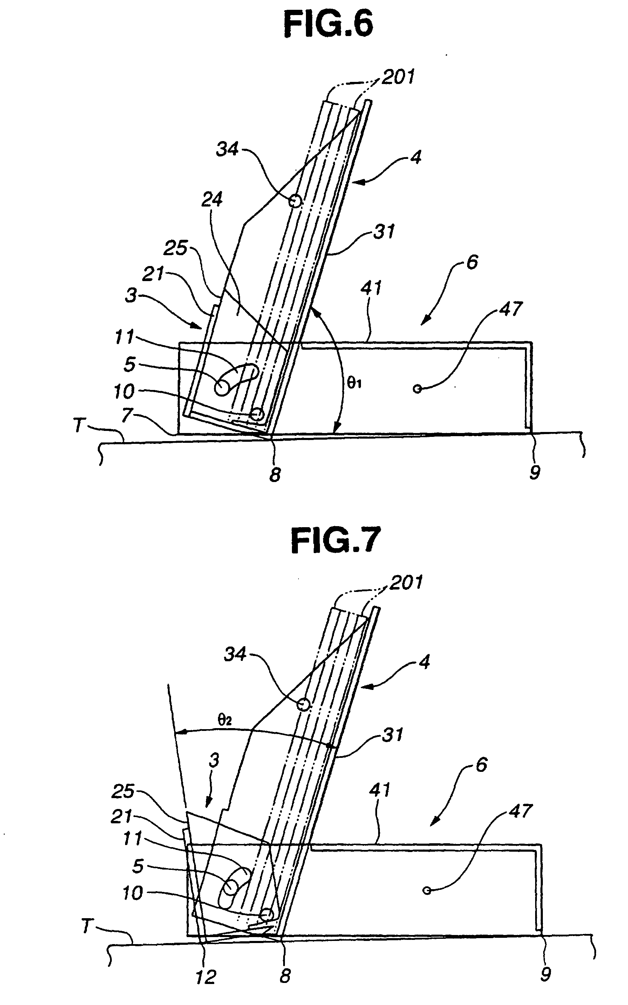

The first ridge portion 8 of the outer case member 4 works so as to float one end portion of the seating face 7 of the cover 6 with respect to the storage case placing surface T, and bring a second ridge portion (or edge) 9 of the cover 6 into contact with the storage case placing surface T. Thus, the first ridge portion 8 of the outer case member 4 and the second ridge portion 9 of the cover 6 define a surface on which the storage case is set on the storage case placing surface T. The downward facing seating face 7 of the cover 6 in the fully open state in Fig. 6 extends or slopes down from the first ridge portion or edge 8 (located on the left side in Fig. 6) to the second ridge portion or edge 9 (on the right side as viewed in FIG. 6)

The inner case member 3 is mounted rotatably or pivotally on the outer case member 4 via second shafts 10 so that an opening of the pocket portion 2 can be expanded (or increased) or contracted (or decreased). The inner case member 3 having arcuate elongated holes 11 in which the first shafts 5 of the cover 6 are inserted.

The inner case member 3 has a third ridge portion 12 which projects from the seating surface 7 of the cover 6 as shown in FIG. 7 when the inner case member 3 is turned a predetermined angle in the direction (direction of an arrow "a" shown in FIG. 2) to expand or increase the opening of the pocket portion 2.

The outer case member 4 has a rotation stopper portion 14 for limiting rotation of the inner case member 3, by abutting on an end portion 13 of the inner case member 3 when the inner case member 3 is turned up to a position (shown by solid lines in Fig. 2) in which the opening of the pocket portion 2 is expanded most. The lower face of the inner case member 3 extends from the third ridge portion (or front end) 12 to the end portion (or rear end) 13. The (rear) end portion 13 of the inner case member 3 is endowed with elasticity.

The inner case member 3 has slits 15 for providing the elasticity to the end portion 13 for abutting on the rotation stopper portion 14 of the outer case member 4. The slits 15 are formed, respectively, in left and right side wall sections 23 and 24 of the inner case member 3 in the vicinity of the end portion 13.

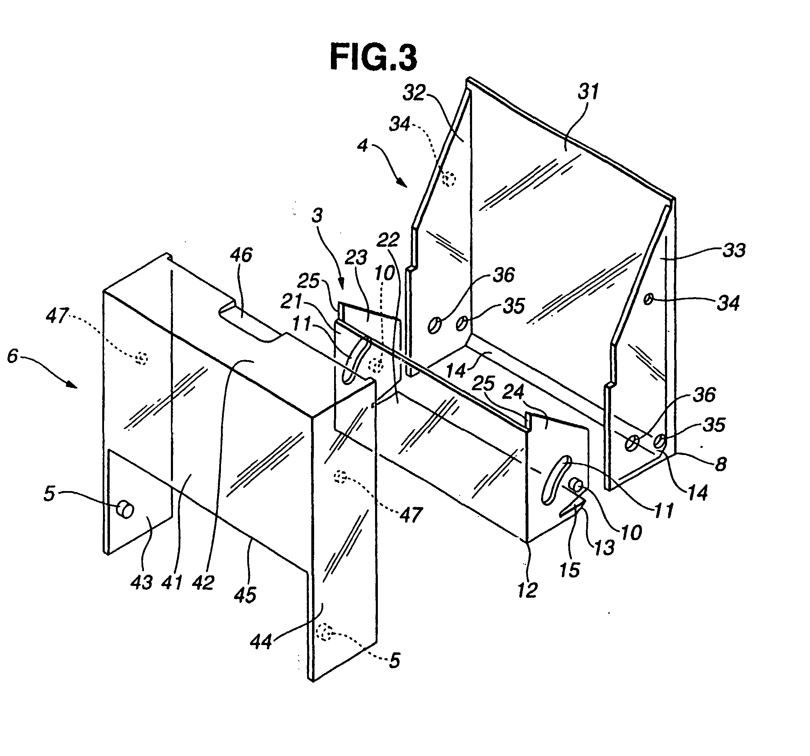

FIG. 3 is an exploded view in perspective of the storage case 1. The inner case member 3 includes a front plate wall section 21, a bottom plate wall section 22, and the left and right side plate wall sections 23 and 24.

Each of the left and right side wall sections 23 and 24 has a second rotation stopper portion 25 at an upper end portion thereof. The second rotation stopper portion 25 of each side wall section 23 or 24 is an upward projection projecting upward from an upper end of the front wall section 21 to the top of the side wall section 23 or 24.

The left and right side wall sections 23 and 24 have the second shafts 10, respectively. The shafts 10 are left and right projections projecting outward from the outside surfaces of the left and right side wall sections 23 and 24, respectively. In each side wall portion 23 or 24, the shaft 10 is located in the lower rear corner thereof near the end portion 13. The left and right side wall sections 23 and 24 further have the arcuate elongated holes 11 extending in the shape of an arc of a circle around the axis defined by the second shafts 10. Each of the left and right side wall sections 23 and 24 of the inner case member 3 has, in the vicinity of the second shaft 10, a unique one of the slits 15 for giving a suitable degree of elasticity to the end portion 13 for abutting against the first rotation stopper portion 14 of the outer case member 4. In each side wall section 23 or 24,the slit 15 extends approximately in parallel to the bottom plate 22 from the rear edge of the side wall section 23 or 24 toward the front wall section 21.

The outer case member 4 includes a rear plate wall section 31 and left and right side plate wall sections 32, 33.

The left and right side wall sections 32 and 33 are superposed on the outer surfaces of the left and right side wall sections 23 and 24 of the inner case member 3 when the inner case member 3 is assembled with the outer case member 4. In the assembled state, the side wall sections 23 and 24 of the inner case member 3 are located along a left and right transverse direction between the left and right side wall sections 32 and 33 of the outer case member 4.

Each of the left and right side wall sections 32 and 33 of the outer case member 4 has a cover latching recess 34, and first and second bearing portions 35 and 36. The cover latching recess 34 is depressed in the outer surface of the side wall section 32 or 33 near the upper end of the side wall section 32 or 33. The first and second bearing portions 35 and 36 are formed in a lower portion of the side wall section 32 or 33.

When the left and right side wall sections 23 and 24 of the inner case member 3 are inserted between the left and right side wall sections 32 and 33 of the outer case member 4, the second shafts 10 are fitted in the first bearing portions 35 of the outer case member 4, whereby the inner case member 3 is rotatable, relative to the outer case member 4, about the axis defined by the bearing portions (or holes) 35. The second bearing portions (or holes) 36 are formed in such positions that the bearing portions 36 overlap the arcuate elongated holes 11 when the inner case member 3 is attached to the outer case member 4.

The cover 6 includes a front plate wall section 41, an upper plate wall section 42, and left and right side plate wall sections 43 and 44. The front plate 41 has, at a lower end portion thereof, a (rectangular) window 45 which the front wall section 21 of the inner case member 3 faces. The upper wall section 42 is provided with a nail engaging portion 46 for opening and closing the cover 6. The left and right side wall sections 43 and 44 are superposed on the outer surfaces of the left and right side wall sections 32 and 33 of the outer case member 4 when the cover 6 is assembled with the outer case member 4. On each of the left and right sides, the side wall section 32 or 33 of the outer case member 4 is placed between the side wall section 23 or 24 of the inner case member 3 and the side wall section 43 or 44 of the cover 6.

The side wall sections 43 and 44 of the cover 6 are provided, in the inner surfaces of upper end portions thereof, with latching inward projections 47 adapted to be engaged with the cover latching recesses 34 of the outer case member 4 and thereby latch the cover 6 in the closed state. The side wall sections 43 and 44 are further provided, on the inner surfaces of lower end portions thereof, with the first shafts 5 which are received in the second bearing portions (or circular hole) 36 of the outer case member 4 and the arcuate elongated holes 11 of the inner case member 3. The cover 6 is put on the outer case member 4 so as to clamp the outer case member 4 between the left and right side wall sections 43 and 44. The cover 6 is mounted pivotally on the outer case member 4 through the first shafts 5 received in the second bearing portions 36 of the outer case member 4 and the arcuate elongated holes 11 of the inner case member 3. In this example, the storage case 1 is made of a synthetic resin, such as polystyrene, acrylstyrene, polycarbonate, ABS, etc.

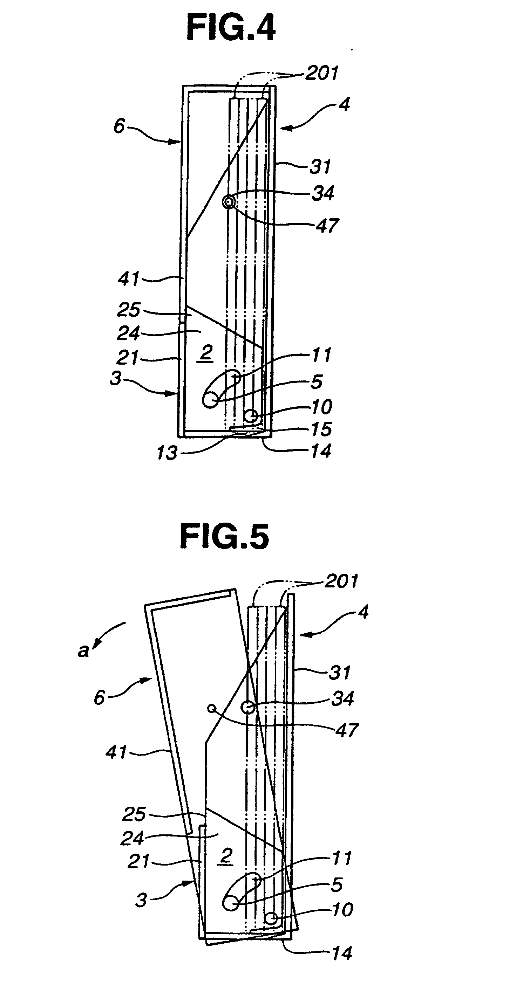

The operation of the storage case 1 will now be described. When disks 201...201 are inserted in the pocket portion 2 of the inner case member 3, and then the cover 6 is closed as shown in Fig. 4, the projections 47 engage with the cover latching recesses 34, so that the cover 6 is latched in the closed state. When the cover 6 is in the closed state, the second rotation stopper portions 25 at the upper end portions of the left and right side wall sections 23 and 24 of the inner case member 3 abut on the inner surface of the front plate 41 of the cover 6 to prevent the second rotation stopper portions 25 from projecting from the front plate 41 and to hold the outer surfaces of the front wall section 41 of the cover 6 and the front wall section 21 of the inner case member 3 flush with each other as shown in FIG. 4.

When the cover 6 is turned in the opening direction (shown by an arrow "a"), the projections 47 move out of the cover latching recesses 34 as shown in FIG. 5, so that the cover 6 is unlatched.

When the cover 6 is turned about 290° with respect to the outer case member 4, the lower end of the front plate 41 of the cover 6 abuts on the rear wall section 31 of the outer case member 4 as shown in FIG. 6. Consequently, the outer case member 4 is supported in the inclined posture in which the outer case member 4 is inclined at a predetermined angle of inclination of θ₁. In this state shown in FIG. 6, the first (rear) ridge portion 8 of the outer case member 4 projects from the seating face 7 of the cover 6. Accordingly, when the seating face 7 of the cover 6 is set on the storage case placing surface T, the first ridge portion 8 of the outer case member 4 and the second ridge portion 9 of the cover 6 are put in contact with the upward facing storage case placing surface T to define a surface (seating surface) in which the storage case is set on the mentioned surface T.

When the inner case member 3 is rotated through a predetermined angle so as to bring the same down forward, an angle of opening θ₂ between the front wall section 21 of the inner case member 3 and the rear wall section 31 of the outer case member 4 increases as shown in FIG. 7, and the opening of the pocket portion 2 expands so as to facilitate removal of the disks 201...201. At this time, the third ridge portion 12 between the front wall section 21 and bottom wall section 22 of the inner case member 3 is put in contact with the storage case placing surface T, and defines, with the first and second ridge portions 8 and 9, the surface (seating surface) in which the storage case is set on the mentioned surface T. In this embodiment, the storage case 1 is formed as a storage case for information recording media, such as disk cartridges, etc., and it may also be formed so as to store therein articles other than the disk cartridges.

The storage case according to the present invention has the following advantages.
(1) According to an aspect of the present invention, the storage case is formed so that the ridge portion at the lower end of the outer case member engages the storage case placing surface when the outer case member is set on the same surface by using the cover as a base with the outer case member inclined at a predetermined angle, whereby the outer case member becomes difficult to be turned in the direction in which the outer case member falls.
(2) According to another aspect of the present invention, the storage case enables the object articles to be taken out therefrom easily by turning the inner case member so as to expand the opening of the pocket portion.
(3) According to still another aspect of the present invention, the storage case has a surface (seating surface), which is formed of a ridge portion of the outer case member, a ridge portion of the cover and a ridge section of the pocket portion, at which surface of the storage case is set on the storage case placing surface, so that the storage case can be set in a stable condition on the storage case placing surface.
(4) According to a further aspect of the present invention, the storage case is given an elasticity at an end portion of the inner case member, so that, even when this end portion engages the first turning preventing portion of the outer case member with a large force, a shock absorbing effect thereof is displayed, whereby the shafts, etc. around which the inner and outer case members are turned can be protected.
(5) According to another aspect of the present invention, the storage case can be given an elasticity at the end portion of the inner case member by a simple slit forming method.
(6) According to still another aspect of the present invention, the storage case is capable of preventing the inner case member from projecting from the front surface of the cover when the cover is in a closed condition.
(7) According to a further aspect of the present invention, the storage case uses a synthetic resin as a material therefore, so that the storage case can be manufactured easily and provided at a low price.
(8) According to another aspect of the present invention, the storage case is capable of protecting information recording media.

## Claims

1. A storage case (1) comprising:
an inner case member (3) forming a pocket portion (2) for receiving object articles (201);
an outer case member (4) forming the storage case with the inner case member and having a lower ridge portion (8) to be placed on a storage case placing surface (T); and
a cover (6) pivotally mounted on the outer case member, the cover being swingable from a closed state to an opened state in which the outer case member is inclined at a predetermined inclination angle (θ₁) with respect to a seating face (7) of the cover and thereby supported on the cover
**characterized in that**
the lower ridge portion (8) of the outer case member is projecting downward from the seating face (7) of the cover in the open state.

2. A storage case according to Claim 1, wherein the inner case member (3) is mounted on the outer case member (4) so that the inner case member is rotatable in a direction (a) to increase an opening of the pocket portion (2).

3. A storage case according to Claim 2, wherein the inner case member (3) has a lower ridge portion (12) projecting downward from the cover (6) in the open state when the inner case member is rotated a predetermined angle in the direction to increase the opening of the pocket portion (2).

4. A storage case according to Claim 2, wherein the outer case member (4) comprises a rotation stopper portion (14) for limiting rotation of the inner case member (3) in a direction to decrease the opening of the pocket portion and the inner case member comprises an end portion (13) for elastically abutting on the rotation stopper portion of the outer case member.

5. A storage case according to Claim 4, wherein the inner case member comprises a slit ( 15) for providing elasticity to the end portion.

6. A storage case according to Claim 2, wherein the inner case member (3) comprises a rotation stopper portion (25) for holding the inner case member in a non-projected correct position by abutting on an inside surface of the front wall (41) of the cover (6) when the cover is in the closed state.

7. A storage case according to Claim 1, wherein each of the inner and outer case members and the cover is made of a synthetic resin.

8. A storage case according to Claim 7, wherein the synthetic resin is one of polystyrene, acrylstyrene, polycarbonate, and ABS.

9. A storage case according to Claim 1, wherein the storage case is adapted to hold the object articles which are information recording media.

## Patentansprüche

1. Aufbewahrungsbehälter (1), aufweisend:
ein inneres Behälterelement (3), das ein Taschenteil (2) zur Unterbringung von Gegenstandsartikeln (201) bildet,
ein äußeres Behälterelement (4), das mit dem inneren Behälterelement den Aufbewahrungsbehälter bildet und einen auf einer Aufbewahrungsbehälter-Platzierungsfläche zu platzierenden unteren Kantenabschnitt (8) aufweist, und
eine drehbar am äußeren Behälterelement befestigte Abdeckung (6), wobei die Abdeckung von einem geschlossenen Zustand in einen offenen Zustand, bei dem das äußere Behälterelement in einem vorbestimmten Neigungswinkel (θ₁) in Bezug auf eine Sitzfläche (7) der Abdeckung geneigt ist und dabei an der Abdeckung gehalten ist, schwenkbar ist,
**dadurch gekennzeichnet, dass**
der untere Kantenabschnitt (8) des äußeren Behälterelements von der Sitzfläche (7) der Abdeckung im offenen Zustand nach unten vorsteht.

2. Aufbewahrungsbehälter nach Anspruch 1, wobei das innere Behälterelement (3) am äußeren Behälterelement (4) befestigt ist, so dass das innere Behälterelement in einer Richtung (a) zum Vergrößern einer Öffnung des Taschenteils (2) drehbar ist.

3. Aufbewahrungsbehälter nach Anspruch 2, wobei das innere Behälterelement (3) einen unteren Kantenabschnitt (12) aufweist, der von der Abdeckung (6) im offenen Zustand nach unten vorsteht, wenn das innere Behälterelement um einen vorbestimmten Winkel in der Richtung zum Vergrößern der Öffnung des Taschenteils (2) gedreht ist.

4. Aufbewahrungsbehälter nach Anspruch 2, wobei das äußere Behälterelement (4) einen Drehanhalteabschnitt (14) zur Begrenzung der Drehung des inneren Behälterelements (3) in einer Richtung zur Verkleinerung der Öffnung des Taschenteils aufweist und das innere Behälterelement einen Endabschnitt (13) zum elastischen Anstoßen an den Drehanhalteschnitt des äußeren Behälterelements aufweist.

5. Aufbewahrungsbehälter nach Anspruch 4, wobei das innere Behälterelement einen Schlitz (15) zur Erzeugung der Elastizität des Endabschnitts aufweist.

6. Aufbewahrungsbehälter nach Anspruch 2, wobei das innere Behälterelement (3) einen Drehanhalteabschnitt (25) zum Halten des inneren Behälterelements in einer nicht vorstehenden Position durch Anstoßen an eine innenseitige Fläche der Vorderwand (41) der Abdeckung (6), wenn die Abdeckung im geschlossenen Zustand ist, aufweist.

7. Aufbewahrungsbehälter nach Anspruch 1, wobei das innere und äußere Behälterelement und die Abdeckung jeweils aus synthetischem Harz gebildet sind.

8. Aufbewahrungsbehälter nach Anspruch 7, wobei das synthetische Harz eines von Polystyrol, Acrylstyrol, Polycarbonat und ABS ist.

9. Aufbewahrungsbehälter nach Anspruch 1, wobei der Aufbewahrungsbehälter zum Halten der Gegenstandsartikel, die Informationsaufzeichnungsmedien sind, geeignet ist.

## Revendications

1. Boîtier de stockage (1) comprenant :
un élément de boîtier interne (3) formant une partie de poche (2) destinée à recevoir des articles d'objets (201) ;
un élément de boîtier externe (4) formant le boîtier de stockage avec l'élément de boîtier interne et comportant une partie de strie inférieure (8) à placer sur une surface de placement (T) de boîtier de stockage ; et
un couvercle (6) monté avec faculté de pivotement sur l'élément de boîtier externe, le couvercle pouvant osciller d'un état fermé à un état ouvert dans ce dernier l'élément de boîtier externe étant incliné selon un angle d'inclinaison prédéterminé (θ₁) par rapport à une face d'assise (7) du couvercle et supporté ainsi sur le couvercle
**caractérisé en ce que**
la partie de strie inférieure (8) de l'élément de boîtier externe dépasse vers le bas de la face d'assise (7) du couvercle dans l'état ouvert.

2. Boîtier de stockage selon la revendication 1, dans lequel l'élément de boîtier interne (3) est monté sur l'élément de boîtier externe (4) de sorte que l'élément de boîtier interne est rotatif dans une direction (a) en vue d'augmenter une ouverture de la partie de poche (2).

3. Boîtier de stockage selon la revendication 2, dans lequel l'élément de boîtier interne (3) comporte une partie de strie inférieure (12) dépassant vers le bas du couvercle (6) dans l'état ouvert lorsque l'élément de boîtier interne est tourné d'un angle prédéterminé dans la direction pour augmenter l'ouverture de la partie de poche (2).

4. Boîtier de stockage selon la revendication 2, dans lequel l'élément de boîtier externe (4) comprend une partie d'arrêt de rotation (14) destinée à limiter la rotation de l'élément de boîtier interne (3) dans une direction en vue de diminuer l'ouverture de la partie de poche et l'élément de boîtier interne comprend une partie d'extrémité (13) destinée à venir en butée de manière élastique sur la partie d'arrêt de rotation de l'élément de boîtier externe.

5. Boîtier de stockage selon la revendication 4, dans lequel l'élément de boîtier interne comprend une fente (15) destinée à conférer une élasticité à la partie d'extrémité.

6. Boîtier de stockage selon la revendication 2, dans lequel l'élément de boîtier interne (3) comprend une partie d'arrêt de rotation (25) destinée à maintenir l'élément de boîtier interne dans une position correcte non dépassante en venant en butée sur une surface interne de la paroi avant (41) du couvercle (6) lorsque le couvercle est dans l'état fermé.

7. Boîtier de stockage selon la revendication 1, dans lequel chacun des éléments de boîtier interne et externe et du couvercle sont constitués d'une résine synthétique.

8. Boîtier de stockage selon la revendication 7, dans lequel la résine synthétique est l'une parmi le polystyrène, l'acrylstyrène, le polycarbonate et l'ABS.

9. Boîtier de stockage selon la revendication 1, dans lequel le boîtier de stockage est adapté pour maintenir les articles d'objet qui sont des supports d'enregistrement d'informations
